# EUROPEAN PATENT APPLICATION

(11) **EP 4 459 858 A1**
(43) Date of publication of application: **06.11.2024**
(21) Application number: 23171580.6
(22) Date of filing: 04.05.2023
(51) Int. Cl.: H02M 7/483, H02M 7/487

(54) **INVERTER AND METHOD OF OPERATING A DIODE-CLAMPED INVERTER**

(71) Applicant: ABB E-mobility B.V., 2629 JG Delft (NL); ABB Schweiz AG, 5400 Baden (CH)
(72) Inventor: Rothmund, Daniel, 5243 Mülligen (CH); Canales, Francisco, 5405 Baden-Dättwil (CH)
(74) Representative: Zimmermann & Partner Patentanwälte mbB

(57) **Abstract**

An inverter is described. The inverter includes a DC bus connectable to a DC power source and having a first leg and a second leg, a plurality of electronic switches connected in series, a first one of the electronic switches being connected to the first leg and a second one of the electronic switches being connected to the second leg, the plurality of electronic switches defining a plurality of intermediate switch nodes therebetween, a voltage divider connected to the first leg and the second leg, the voltage divider comprising a plurality of capacitors connected in series and defining at least one first partial voltage node, at least one first-level clamping diode pair, each first-level clamping diode pair comprising at least two diodes connected in series and defining a diode node in between the at least two diodes, the diode node being connected to one of the at least one first partial voltage node. At least one diode of the first-level clamping diode pair is connected, at a side of the diode other than the diode node, to an intermediate switch node to define a first partial clamped voltage at the intermediate switch node. The inverter further includes at least one flying capacitor connected in parallel to first-level clamping diode pair. The electronic switches are grouped into high-side switches and low-side switches. Control inputs of the high-side switches are functionally connected to simultaneously switch all of the high-side switches, and control inputs of the low-side switches are functionally connected to simultaneously switch all of the low-side switches.

## Description

Aspects of the invention relate to an inverter, particularly a power inverter, particularly a power inverter suitable for medium and/or high voltage applications. The invention particularly relates to the operation of a diode-clamped inverter having a plurality of electronic switches connected in series.

### Technical background:

Power inverters are electronic circuits for generating an alternating current, typically from a direct current source. Inverters can be particularly useful in converters, such as transformer-less converters and/or Solid State Transformers. Such converters become increasingly relevant due to advances in fields such as electrified transportation, supercomputing and data centers, renewable energy production, transmission, and utilization, as well as many other industrial fields requiring a conversion of electric power. Furthermore, inverters may be utilized for driving machines, such as electric motors. Beneficially, compared to other solutions, inverter-based circuits may have a higher power density, and may allow improved control of the generated output power.

Inverters often utilize electronic switches, such as power semiconductor switches, to generate the desired output power. With growing power demands, inverters suitable for switching voltages above 200 Volt, medium voltage or even high voltage become increasingly relevant. However, semiconductor switches having the required blocking voltage may be expensive and/or have other performance drawbacks, such as undesirable frequency response, a higher internal resistance, and/or a limited operational lifespan.

Thus, there is a need for an improved inverter, particularly an inverter suitable for use with medium or high voltages.

### Summary of the invention

In view of the above, the invention as set out in the appended set of claims is provided.

According to an aspect, an inverter is described. The inverter includes a DC bus connectable to a DC power source and having a first leg and a second leg, a plurality of electronic switches connected in series, a first one of the electronic switches being connected to the first leg and a second one of the electronic switches being connected to the second leg, the plurality of electronic switches defining a plurality of intermediate switch nodes therebetween, a voltage divider connected to the first leg and the second leg, the voltage divider comprising a plurality of capacitors connected in series and defining at least one first partial voltage node, at least one first-level clamping diode pair, each first-level clamping diode pair comprising at least two diodes connected in series and defining a diode node in between the at least two diodes, the diode node being connected to one of the at least one first partial voltage node. At least one diode of the first-level clamping diode pair is connected, at a side of the diode other than the diode node, to an intermediate switch node to define a first partial clamped voltage at the intermediate switch node. The inverter further includes at least one flying capacitor connected in parallel to first-level clamping diode pair. The electronic switches are grouped into high-side switches and low-side switches. Control inputs of the high-side switches are functionally connected to simultaneously switch all of the high-side switches, and control inputs of the low-side switches are functionally connected to simultaneously switch all of the low-side switches.

According to an aspect, a method of operating a diode-clamped inverter is described. The diode-clamped inverter includes a plurality of electronic switches connected in series, a first one of the electronic switches being connected to a first leg of a DC bus, and a second one of the electronic switches being connected to a second leg of the DC bus. The electronic switches are grouped into high-side switches and low-side switches. The diode-clamped inverter further includes at least one first-level clamping diode pair, each first-level clamping diode pair including at least two diodes connected in series and defining a diode node in between the at least two diodes. At least one diode of the first-level clamping diode pair is connected, at a side of the diode other than the diode node, to an intermediate switch node to define a first partial clamped voltage at the intermediate switch node. The method includes providing a flying capacitor parallel to the at least one clamping diode pair, switching all high-side switches simultaneously, and switching all low-side switches simultaneously.

According to an aspect, a low voltage is described. A low voltage may be a voltage above 200 Volt (V), such as a voltage between 200 V - 1 kV. According to an aspect, a medium voltage is described. A medium voltage may be voltage of above 1 kV, such as a voltage between 1 kV - 52 kV, particularly between 1 kV - 30 kV. For example, a medium voltage may be a voltage received, and optionally rectified, from a medium voltage grid, such as a 10 kV grid, a 15 kV grid, a 20 kV grid, a 25 kV grid, a 30 kV grid, or even a 50 kV grid.

According to an aspect, an electronic switch is described. The electronic switch may be a semiconductor component, such as a transistor and/or a thyristor. In particular, the electronic switch may be a metal-oxide-semiconductor field-effect transistor (MOSFET), an insulated-gate bipolar transistor (IGBT), high-electron-mobility transistor (HEMT), or an integrated gate-commutated thyristor (IGCT).

According to an aspect, a plurality of electronic switches is described. The plurality of electronic switches is connected in series. The plurality of electronic switches may be connected to a DC power source. The DC power source may define a voltage, such as a DC link voltage. The DC power source may be connected to a first leg and a second leg of a DC bus, and the DC bus may be connected to the electronic switches, e.g. the two outermost electronic switches of the serially connected plurality of electronic switches. The plurality of electronic switches has control inputs. For example, each electronic switch may have a control input, such as a gate, base or trigger. The control input may be configured for receiving a control signal for selectively switching the electronic switch into either a conducting, i.e. closed state, or a non-conducting, i.e. open state.

According to an aspect, the plurality of electronic switches is grouped into high-side switches and low-side switches. The control inputs of the high-side switches are functionally connected to simultaneously switch all of the high-side switches, and the control inputs of the low-side switches are functionally connected to simultaneously switch all of the low-side switches. In some embodiments, the group of high-side switches and the group of low-side switches may each functionally resemble a single switch.

According to an aspect, each switch of the plurality of electronic switches has a blocking voltage, such as a rated blocking voltage. The blocking voltage of the electronic switch may be lower than the voltage to be applied between the first and second leg of the DC bus. The sum of the blocking voltages of the plurality of electronic switches may be higher than the voltage to be applied between the first and second leg of the DC bus. An inverter configured for switching an 800 V DC voltage may comprise a plurality of electronic switches having a 150 V blocking voltage rating. Likewise, each of the plurality of electronic switches may have a blocking voltage of less than 1.7 kV, less than 1.2 kV, less than 1 kV, less than 600 V, less than 400 V, less than 200 V, or even less than 150 V. Beneficially, an electronic switch having a lower blocking voltage may be less expensive, more readily available, and/or have improved or more desirable switching characteristics. Beneficially, by connecting a plurality of electronic switches in series according to embodiments described herein, the blocking voltage of the plurality of electronic switches may be sufficiently high to operate the inverter at the desired voltage, such as a low voltage or even a medium voltage.

According to an aspect, the inverter may be configured for switching a power of a DC power source having a voltage V_{DC} of at least 200 V, at least 400 V, at least 800 V, at least 1 kV, at least 2 kV, at least 5 kV, at least 10 kV, at least 20 kV, or even at least 30 kV.

According to an aspect, the inverter may be configured for switching a power of a DC power source, and/or provide an output power having a power of at least 1 Kilowatt (kW), at least 2 kW, at least 5 kW, at least 10 kW, at least 20 kW, at least 50 kW, at least 100 kW, at least 200 kW, at least 500 kW, or even at least 1 MW.

According to an aspect, the inverter may include diodes, the diodes forming clamping diode pairs. Each diode may have a current rating below 50 Ampere (A), below 20 A, below 10 A, or even below 5 A.

According to an aspect, the inverter may include flying capacitors. Each flying capacitor may have a capacitance at or below 10 microfarad (µF), at or below 5 µF, at or below 2 µF, at or below 1 µF, at or below 500 nF, at or below 200 nF, or even at or below 100 nF.

According to an aspect, the inverter may be configured for driving a medium frequency transformer, particularly in a two-level operation, e.g. by generating a 2-level AC output voltage having the medium frequency. For example, the inverter and/or the medium-frequency transformer may be included in a converter, such as a DC/DC converter, a DC/AC converter, or even an AC/AC converter. A medium frequency, according to embodiments described herein, may be understood as a frequency at or above 400 Hertz (Hz), at or above 600 Hz, at or above 800 Hz, at or above 1 kHz, at or above 2 kHz, at or above 5 kHz, at or above 20 kHz, at or above 50 kHz, or even at or above 100 kHz. Depending on the type of electronic switch, e.g. with SiC MOSFETs or GaN HEMTs, even frequencies in the Megahertz range are possible.

Beneficially, the inverter according to aspects and/or embodiments described herein provides a stable, robust partial clamped voltage at intermediate switch nodes. Beneficially, no active balancing is required for providing the partial clamped voltages. Accordingly, a high voltage rating may be achieved by connecting a plurality of electronic switches in series. The inverter according to aspects and/or embodiments described herein may be flexibly adapted according to the specific requirements, may be simple, efficient and/or reliable.

Further advantages, features, aspects and details that can be combined with embodiments described herein are evident from the dependent claims, the description and the drawings.

### Brief description of the Figures:

The details will be described in the following with reference to the figures, wherein
- Fig. 1: is a schematic circuit diagram of 3-level inverter according to an embodiment;
- Fig. 2: is a schematic circuit diagram of a 4-level inverter according to an embodiment;
- Fig. 3: is a schematic circuit diagram of a 5-level inverter according to an embodiment;
- Fig. 4: is a schematic circuit diagram of a 7-level inverter according to an embodiment;
- Fig. 5: is a schematic circuit diagram of a simplified 5-level inverter according to an embodiment;
- Fig. 6: is a schematic circuit diagram of a simplified 7-level inverter according to an embodiment;
- Fig. 7: is a graph showing signals for switching high-side switches and low-side switches over time in an inverter according to embodiments.; and

### Detailed description of the Figures and of embodiments:

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. In some instances, the same or similar components may be assigned a different reference number, e.g. due to a different configuration within the electronic circuit. Generally, only the differences with respect to the individual embodiments are described. Unless specified otherwise, the description of a part or aspect in one embodiment applies to a corresponding part or aspect in another embodiment as well.

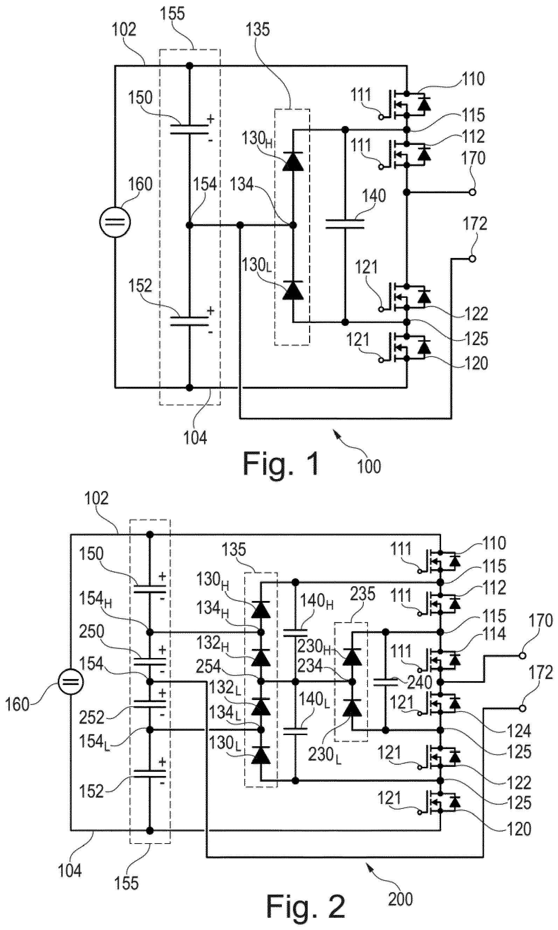

Referring now to Fig. 1, an inverter 100 is described. The inverter 100 may be 3-level inverter. The inverter 100 is connected to a DC power source 160 providing DC power to a DC bus. The DC bus includes a first leg 102 and a second leg 104. The inverter 100 includes four electronic switches 110, 112, 120, 122, such as MOSFETs or IGBTs or any other type of transistor/thyristor, connected in series between the first leg and the second leg. Switch 110 is connected to the first leg 102 of the DC bus, and switch 120 is connected to the second leg of the DC bus. For example, as shown in Fig. 1, the switches 110, 112, 120, 122 may be N-channel MOSFETs. A drain connector of the switch 110 may be connected to to the leg 102 of the DC bus carrying a positive voltage, and a source connector of the switch 120 may be connected to the leg 104 of the DC bus carrying a negative voltage. According to some embodiments, for each electronic switch, complementary transistors, such as a second N-channel MOSFETs connected in series with reversed drain/source polarity may be incorporated, e.g. to increase a reverse blocking voltage of an electronic switch.

The plurality of switches 110, 112, 120, 122 define intermediate switch nodes 115, 125 in-between the electronic switches. Likewise, an intermediate switch node connected to an output 170 may be defined by the innermost switches 112, 122. For the plurality of switches 110, 112, 120, 122 to be operable at a DC bus voltage higher than the blocking voltage of each individual switch, the voltage applied to each switch should not exceed the blocking voltage of the switch. For example, the voltage applied to switch 110 may be the difference between the voltage of the first leg 102 of the DC bus and the voltage applied to the intermediate switch node 115, which may be lower than the voltage between the first leg 102 and the second leg 104 of the DC bus.

As shown in Fig. 1, the inverter 100 includes a capacitive voltage divider 155. The voltage divider 155 includes two capacitors 150, 152. The capacitors 150, 152 are connected in series between the first leg 102 and the second leg 104 of the DC bus, and define a first partial voltage node 154 in between the capacitors 150, 152. The capacitors 150, 152 may have comparable characteristics, such as a comparable, similar or even identical capacitance. For example, the voltage divider 155 may define a voltage at the first partial voltage node 154 such as half the voltage of the DC bus.

According to embodiments, the voltage divider may include an even number of capacitors. The first partial voltage node 154 may define and/or include a neutral voltage node. For example, the first partial voltage node 154 may be connected to a neutral voltage output terminal.

In addition to acting as a voltage divider, the capacitors 150, 152 may store an energy. For example, the capacitors 150, 152 may be DC link capacitors, operate as decoupling capacitors and/or bypass capacitors.

As shown in Fig. 1, the inverter 100 includes a first-level clamping diode pair 135. The first-level clamping diode pair 135 includes two diodes 130_{H}, 130_{L} connected in series. The two diodes 130_{H}, 130_{L} define a diode node 134 in between the two diodes 130_{H}, 130_{L}, the diode node 134 being connected to the first partial voltage node 154. Each diode of the two diodes 130_{H}, 130_{L} is connected, at a side of the diode other than the diode node 134, to an intermediate switch node 115, 125. As shown in Fig. 1, diode 130_{H} is connected to the intermediate switch node 115, and diode 130_{L} is connected to the intermediate switch node 125. Accordingly, each diode of the two diodes 130_{H}, 130_{L} defines a partial clamped voltage at the intermediate switch node 115, 125.

According to embodiments, if a voltage V_{DC} is applied to the DC bus, the voltage at the first partial voltage node 154 may be V_{DC}/2. Accordingly, clamping diode 130_{H} may define a voltage of V_{DC}/2 at the intermediate switch node 115, and clamp any higher voltages. Likewise, clamping diode 130_{L} may define a voltage of V_{DC}/2 at the intermediate switch node 125, and clamp any higher voltages.

According to embodiments, a voltage may be defined by a switching action of the electronic switches 110, 112, 120, 122. For example, the two high-side switches 110, 112 may be closed, i.e. switched into a conducting state, thus defining the voltage at the intermediate switch node 115 to be equal to the voltage of the first leg 102.

As shown in Fig. 1, the inverter 100 includes a flying capacitor 140 connected in parallel to the first-level clamping diode pair 135. In particular, the flying capacitor 140 may be provided between the partial clamped voltages defined by the first-level clamping diode pair. Accordingly, the flying capacitor 140 may be connected to at least one intermediate switch node 115, 125. In the example shown in Fig. 1, the flying capacitor is connected to the two intermediate switch nodes 115, 125.

Beneficially, the flying capacitor 140 improves the robustness of the inverter 100, particularly by storing energy within the flying capacitor suitable for robustly defining a relative voltage of the clamping diode pair 135, or even at one or more intermediate switch nodes 115, 125. In particular, the voltage defined by the flying capacitor 140 remains essentially stable, even during switching of the electronic switches 110, 112, 120, 122.

Beneficially, particularly due to the function of the one or more clamping diode pairs, such as the first level clamping diode pair 135, no active balancing of the flying capacitor is required. In particular, the inverter 100 has the robustness of a flying capacitor inverter, and the simplicity of a diode-clamped inverter. According to an aspect, the inverter 100 may be considered a diode-clamped flying capacitor inverter.

As shown in Fig. 1, the electronic switches 110, 112, 120, 122 are grouped into high-side switches 110, 112, and low side switches 120, 122. The high-side switches are provided between the first leg 102 of the DC bus and the output 170, while the low-side switches are provided between the second leg 104 of the DC bus and the output 170. It should be noted that the term "high-side" or "low-side" may relate to the function of the switch within the circuit, and does not necessarily need to relate to the position of the switch within the circuit, or to the type of switch, such as N-channel or P-channel transistor being used.

The high-side switches 110, 112 each have a control input 111, such as a gate. Likewise, the low-side switches 120, 122 each have a control input 121. The control inputs 111 of the high-side switches, and the control inputs 121 of the low-side switches are functionally connected. When controlled by a signal at the control inputs 111, the high-side switches 110, 112 switch simultaneously. Likewise, when controlled by a signal at the control inputs 121, the low-side switches 120, 122 switch simultaneously.

In some embodiments, a controller may be individually connected via an insulator to each control input 111 and/or control input 121, and be configured for providing signals to the control inputs 111 and/or the control inputs 121 to simultaneously switch the high-side switches and to simultaneously switch the low-side switches. The insulator may provide insulation between the control inputs of the electronic switches.

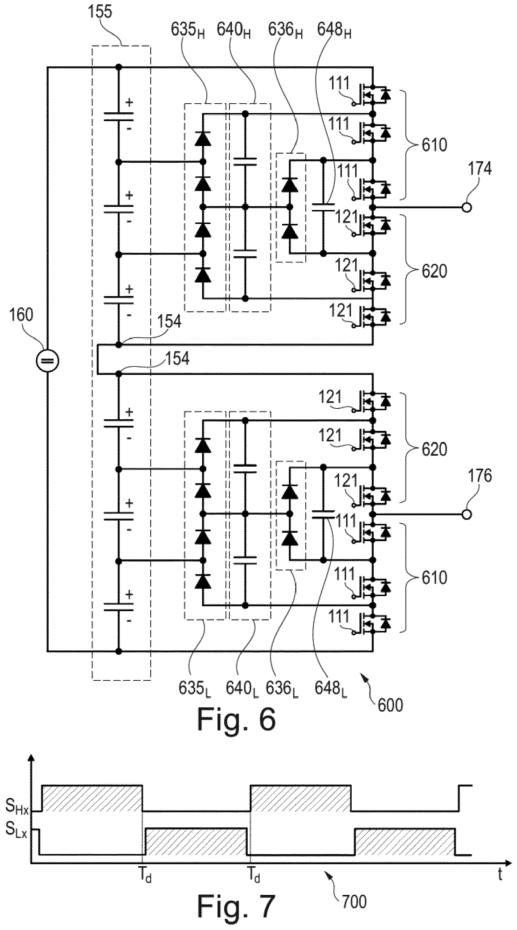

According to embodiments, the inverter 100 shown in Fig. 1 may be a 3-level inverter. This may be understood as three partial voltage levels being defined for the plurality of electronic switches, i.e. a voltage level between the first leg 102 and the second leg 104 of the DC bus, a voltage level between the intermediate switch nodes 115, 125, and a voltage level at the output 170. The term 3-level inverter should not be understood as the inverter 100 being configured for providing a 3-level output power. In particular, the inverter 100 may be configured for providing a rectangular output power of ± V_{DC}/2, i.e. by simultaneously switching the high-side switches 110, 112 and by simultaneously switching the low-side switches 120, 122 in an alternating manner, such as in a 2-level operation. A method of operating a diode-clamped inverter, such as the inverter 100, is described in further detail with reference to Fig. 7.

Beneficially, no current is intended to flow through the flying capacitor 140 or the diodes 130_{H}, 130_{L} of the clamping diode pair 135. Accordingly, the flying capacitor 140 or the diodes 130_{H}, 130_{L} may be dimensioned for much lower current ratings compared to the electronic switches 110, 112, 120, 122. For example, even in high-power applications, such as in a 200 kW inverter, the flying capacitor(s) and the diodes of the clamping diode pair(s) may be small components, such as SMD components.

For example, in some embodiments, in a 200 kW converter, the current rating of the diodes 130_{H}, 130_{L} can be below 10 Amperes (A), or even as low as 5 A, and the capacitance of the flying capacitor 140 can be as low as 500 Nanofarad (nF), or even as low as 220 nF. It was observed that the clamping diode pair(s) and flying capacitor(s) in inverters according to embodiments described herein are exposed to currents primarily due to non-identical switching times of the plurality of electronic switches. Accordingly, the required rating of the clamping diode pair(s) and flying capacitor(s) may be essentially independent of the switched power.

Referring now to Fig. 2, an inverter 200 is described. The inverter 200 may be 4-level inverter. Only the differences with respect to the inverter 100 described with reference to Fig. 1 will be described.

The inverter 200 includes a capacitive voltage divider 155 including four capacitors 150, 250, 152, 252 connected in series. A first partial voltage node 154_{H} is defined by capacitors 150, 250. A second partial voltage node 154_{L} is defined by capacitors 152, 252. According to embodiments, a partial voltage node 154, being a neutral voltage node, may be defined by capacitors 250 and 252.

The inverter 200 includes a first-level clamping diode pair 135 including four diodes 130_{H}, 132_{H}, 130_{L}, 132_{L}. The two diodes 130_{H}, 132_{H} define a diode node 134_{H} in between the two diodes 130_{H}, 132_{H}, the diode node 134_{H} being connected to the first partial voltage node 154_{H}. The two diodes 130_{L}, 132_{L} define a diode node 134_{L} in between the two diodes 130_{L}, 132_{L}, the diode node 134_{L} being connected to the second partial voltage node 154_{L}. Each diode of the two diodes 130_{H}, 130_{L} is connected, at a side of the diode other than the diode node 134_{H}, 134_{L}, to an intermediate switch node 115, 125. As shown in Fig. 2, diode 130_{H} is connected to the intermediate switch node 115 between electronic switches 110, 112, and diode 130_{L} is connected to the intermediate switch node 125 between electronic switches 120, 122. Accordingly, each diode of the two diodes 130_{H}, 130_{L} defines a partial clamped voltage at the connected intermediate switch node 115, 125. Flying capacitors 140_{H}, 140_{L} are connected in parallel to the first-level clamping diode pair 135. In particular, flying capacitor 140_{H} may be connected, at a side of each of the diodes 130_{H}, 132_{H} other than the node 134_{H}, to the diodes 130_{H}, 132_{H}. In particular, flying capacitor 140_{L} may be connected, at a side of each of the diodes 130_{L}, 132_{L} other than the node 134_{L}, to the diodes 130_{L}, 132_{L}.

According to embodiments, as shown in Fig. 2, the first-level clamping diode pair 135 may include two first-level clamping diode pairs. For example, the diodes 130_{H}, 132_{H} may form a first first-level clamping diode pair, and the diodes 130_{L}, 132_{L} may form a second first-level clamping diode pair. Each diode node 134_{H}, 134_{L} may be connected to a partial voltage node 154_{H}, 154_{L}.

According to embodiments, if a voltage V_{DC} is applied to the DC bus, the voltage at the first partial voltage node 154_{H} may be 3/4 V_{DC}, and the voltage at the second partial voltage node 154_{L} may be 1/4 V_{DC}. Accordingly, clamping diode 130_{H} may define a voltage of 3/4 V_{DC} at the intermediate switch node 115 between the electronic switches 110, 112, and clamp any higher voltages. Likewise, clamping diode 130_{L} may define a voltage of 1/4 V_{DC} at the intermediate switch node 125 between the electronic switches 120, 122, and clamp any higher voltages.

The first-level clamping diode pair 135 defines a second partial clamped voltage at a first-level partial clamped voltage node 254. In the embodiment shown in Fig. 2, the first-level partial clamped voltage node 254 is defined by diodes 132_{H}, 132_{L}.

The inverter 200 includes a second-level clamping diode pair 235, including two diodes 230_{H}, 230_{L} connected in series. The two diodes 230H, 230L define a diode node 234 in between the two diodes 230_{H}, 230_{L}. The diode node 234 is connected to the first-level partial clamped voltage node 254. Furthermore, the diode node 234 is connected to one side of each of the flying capacitors 140_{H}, 140_{L}. Each diode of the two diodes 230_{H}, 230_{L} is connected, at a side of the diode other than the diode node 234, to an intermediate switch node 115, 125. As shown in Fig. 2, diode 230_{H} is connected to the intermediate switch node 115 between electronic switches 112, 114, and diode 130_{L} is connected to the intermediate switch node 125 between electronic switches 122, 124. Accordingly, each diode of the two diodes 230_{H}, 230_{L} defines a partial clamped voltage at the connected intermediate switch node 115, 125. The second-level clamping diode pair 235 may function similarly to the first-level clamping diode pair, e.g. the first-level clamping diode pair 135 shown in Fig. 1, with the difference that the voltage at the diode node 234 is defined by the first-level clamping diode pair 135 of the inverter 200, instead of the voltage divider 155.

The inverter 200 further includes a flying capacitor 240 connected in parallel to the second-level clamping diode pair. The electronic switches 110, 112, 114 are grouped into high-side switches, and the electronic switches 120, 122, 124 are grouped into low-side switches.

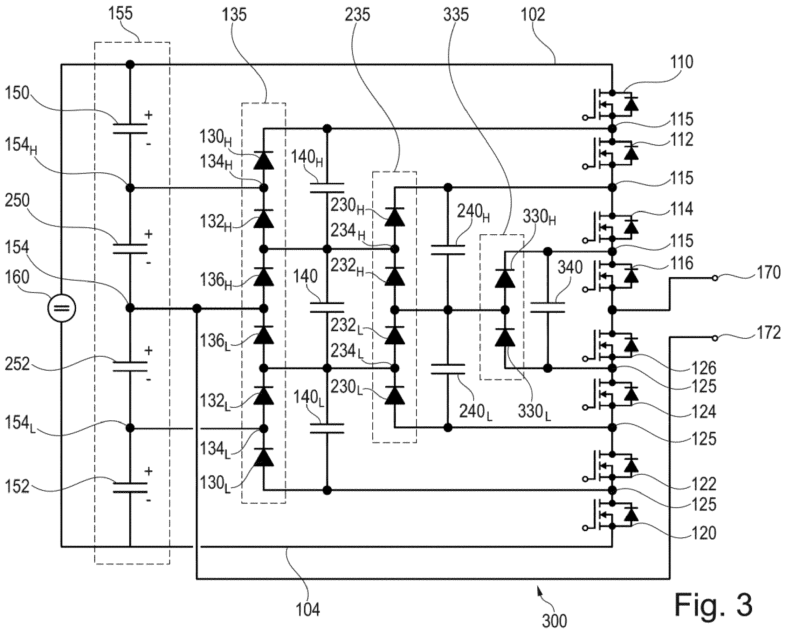

Referring now to Fig. 3, an inverter 300 is described. The inverter 300 may be 5-level inverter. Only the differences with respect to the inverter 100 described with reference to Fig. 1, and/or the inverter 200 described with reference to Fig. 2 will be described.

The inverter 300 includes a second-level clamping diode pair 235, and a third-level clamping diode pair 335. The second-level clamping diode pair 235, and a third-level clamping diode pair 335 may function similarly to the first-level clamping diode pair 135 and the second-level clamping diode pair 235 shown in Fig. 2, with the difference that the voltage at the diode nodes 234_{H} and 234_{L} is defined by the first-level clamping diode pair 135 of the inverter 300, instead of the voltage divider 155.

The inverter 300 includes two second-level clamping diode pairs 230 connected in series. A first clamping diode pair is formed by diodes 230_{H}, 232_{H}, defining the diode node 234_{H} therebetween, and a second clamping diode pair is formed by diodes 230_{L}, 232_{L}, defining the diode node 234_{L} therebetween. A second-level partial clamped voltage node is formed between the diodes 232_{H}, 232_{L}. Two flying capacitors 240_{H}, 240_{L} are connected in series to each other, flying capacitor 240H being connected in parallel to the clamping diode pair formed by the diodes 230_{H}, 232_{H}, and flying capacitor 240_{L} being connected in parallel to the clamping diode pair formed by the diodes 230_{L}, 232_{L}.

The inverter 300 includes a first-level clamping diode pair 135 comprising six diodes 130_{H}, 132_{H}, 130_{L}, 132_{L}, 136_{H}, 136_{L}. The two diodes 130_{H}, 132_{H} define a diode node 134_{H} in between the two diodes 130_{H}, 132_{H}, the diode node 134_{H} being connected to the first partial voltage node 154_{H}. The two diodes 130_{L}, 132_{L} define a diode node 134_{L} in between the two diodes 130_{L}, 132_{L}, the diode node 134_{L} being connected to the second partial voltage node 154_{L}. The two diodes 136_{H}, 136_{L} define a diode node connected to the neutral partial voltage node 154. Each diode of the two diodes 130_{H}, 130_{L} is connected, at a side of the diode other than the diode node 134_{H}, 134_{L}, to an intermediate switch node 115, 125. As shown in Fig. 3, diode 130_{H} is connected to the intermediate switch node 115 between electronic switches 110, 112, and diode 130_{L} is connected to the intermediate switch node 125 between electronic switches 120, 122. Accordingly, each diode of the two diodes 130_{H}, 130_{L} defines a partial clamped voltage at the connected intermediate switch node 115, 125. Diode 136_{H} is connected, at a side of the diode other than the diode node, to the diode node 234_{H} of the second-level clamping diode pair 235. Diode 136_{L} is connected, at a side of the diode other than the diode node, to the diode node 234_{L} of the second-level clamping diode pair 235. Flying capacitors 140, 140_{H}, 140_{L} are connected in parallel to the first-level clamping diode pair 135. In particular, flying capacitor 140_{H} may be connected, at a side of each of the diodes 130_{H}, 132_{H} other than the node 134_{H}, to the diodes 130_{H}, 132_{H}. In particular, flying capacitor 140_{L} may be connected, at a side of each of the diodes 130_{L}, 132_{L} other than the node 134_{L}, to the diodes 130_{L}, 132_{L}. In particular, flying capacitor 140 may be connected, at a side of each of the diodes 136_{H}, 136_{L} other than the diode node of diodes 136_{H}, 136_{L}, to the diodes 136_{H}, 136_{L}.

As shown in Fig. 3, the inverter 300 includes eight electronic switches, switches 110, 112, 114, 116 being high-side switches, and switches 120, 122, 124, 126 being low-side switches. Partial clamped voltages are provided to the intermediate switch nodes 115, 125 and/or defined by the first-level, second-level and third-level lamping diode pairs 135, 235, 335, and the flying capacitors.

As is evident from the embodiments described with reference to Fig. 1 to Fig. 3, an inverter according to embodiments may include any number of serially connected electronic switches. Accordingly, higher-level clamping diode pairs may be provided to define voltages at the intermediate switch nodes. For example, each clamping diode pair may define a voltage at a high-side intermediate switch node and/or a low-side intermediate switch node.

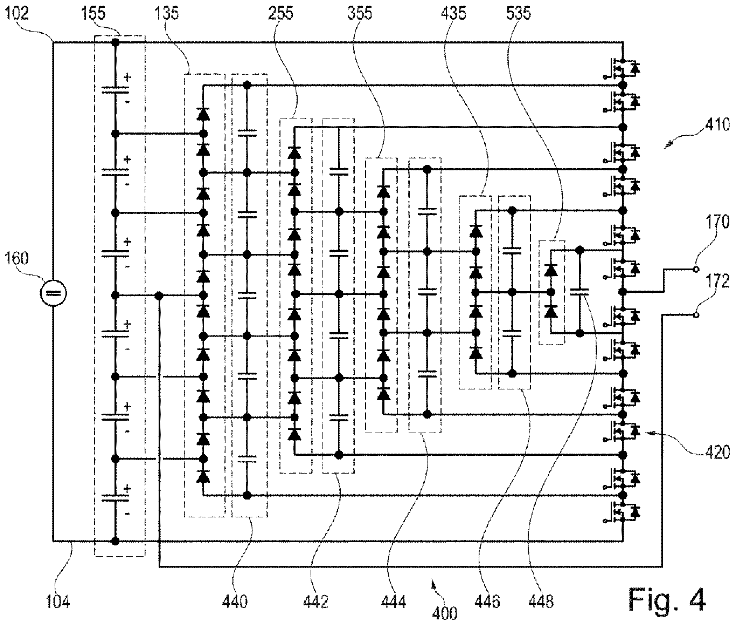

An inverter according to embodiments may include at least one n-th level clamping diode pair, the n-th level lamping diode pair including at least two diodes connected in series and defining a diode node in between the two diodes. The diode node may be connected to a (n-1)-th level partial clamped voltage node. A first level diode node may be connected to a partial voltage node defined by a voltage divider. At least one diode of each n-th level clamping diode pair is connected to an intermediate switch node to define an n-th level partial clamped voltage at the intermediate switch node. The inverter may include at least one flying capacitor connected in parallel to the n-th level clamping diode pair, and may include a plurality of flying capacitors, each capacitor being connected to two diodes of each n-th level clamping diode pair. N may be equal or larger than 2. An inverter with n=2 may be the inverter 200 as shown in Fig. 2. An inverter with n=3 may be the inverter 300 as shown in Fig. 3. An inverter with n=5 may be the inverter 400 as shown in Fig. 4.

Referring now to Fig. 4, a 7-level inverter 400 is shown. Only the differences with respect to the inverters 100, 200, 300 described with reference to Fig. 1 to Fig. 3 will be described. The inverter includes a voltage divider 155 including six capacitors. The inverter further includes 12 electronic switches connected in series.

A first-level clamping diode pair 135 includes ten diodes connected in series and connected at diode nodes defined by the diodes of the first-level clamping diode pair 135 to partial voltage nodes defined by the voltage divider 155. The outermost diodes of the first-level clamping diode pair 135 define a first partial clamped voltage at intermediate switch nodes of the electronic switches 410, 420. Five flying capacitors 440 are connected to the first-level clamping diode pair 135 at clamped partial voltage nodes defined by the first-level clamping diode pair 135.

A second-level clamping diode pair 235 includes 8 diodes connected in series and connected at diode nodes defined by the diodes of the second-level clamping diode pair 235 to clamped partial voltage nodes defined by the first-level clamping diode pair 135. The outermost diodes of the second-level clamping diode pair 235 define a second partial clamped voltage at intermediate switch nodes of the electronic switches 410, 420. Four flying capacitors 442 are connected to the second-level clamping diode pair 235 at clamped partial voltage nodes defined by the second-level clamping diode pair 235.

A third-level clamping diode pair 335 includes six diodes connected in series and connected at diode nodes defined by the diodes of the third-level clamping diode pair 335 to clamped partial voltage nodes defined by the second-level clamping diode pair 235. The outermost diodes of the third-level clamping diode pair 335 define a third partial clamped voltage at intermediate switch nodes of the electronic switches 410, 420. Three flying capacitors 444 are connected to the third-level clamping diode pair 335 at clamped partial voltage nodes defined by the third-level clamping diode pair 335.

A fourth-level clamping diode pair 435 includes four diodes connected in series and connected at diode nodes defined by the diodes of the fourth-level clamping diode pair 435 to clamped partial voltage nodes defined by the third-level clamping diode pair 335. The outermost diodes of the fourth-level clamping diode pair 435 define a fourth partial clamped voltage at intermediate switch nodes of the electronic switches 410, 420. Two flying capacitors 446 are connected to the fourth-level clamping diode pair 435 at clamped partial voltage nodes defined by the fourth-level clamping diode pair 435.

A fifth-level clamping diode pair 535 includes two diodes connected in series and connected at a diode node defined by the diodes of the fifth-level clamping diode pair 535 to the clamped partial voltage node defined by the fourth-level clamping diode pair 435. The diodes of the fourth-level clamping diode pair 535 define a fourth partial clamped voltage at intermediate switch nodes of the electronic switches 410, 420. A flying capacitor 448 is connected to the fifth-level clamping diode pair 535 at the fifth clamped partial voltage nodes defined by the fifth-level clamping diode pair 535.

As is evident from the embodiments shown in Fig. 1 to Fig. 4, the component number of the clamping diode pairs and the flying capacitors increases non-linearly with the number of electronic switches. Thus, >7-level inverters may be undesirable for some applications. An inverter having a beneficially reduced component number and at least some of the benefits of the inverters described with reference to Fig. 1 to Fig. 4 may be obtained by combining sub-modules of e.g. a 3-level, 4-level, 5-level, 6-level, or even a higher-level inverter.

According to embodiments, an inverter based on sub-modules of a lower-level inverter may be obtained by connecting one of the first partial voltage nodes to an intermediate switch node. Beneficially, the first partial voltage node may be a neutral voltage node, particularly a neutral voltage node defined by a voltage divider. In particular, the neutral voltage node may be connected to a neutral voltage intermediate switch node, i.e. an intermediate switch node symmetrically provided between pairs of electronic switches.

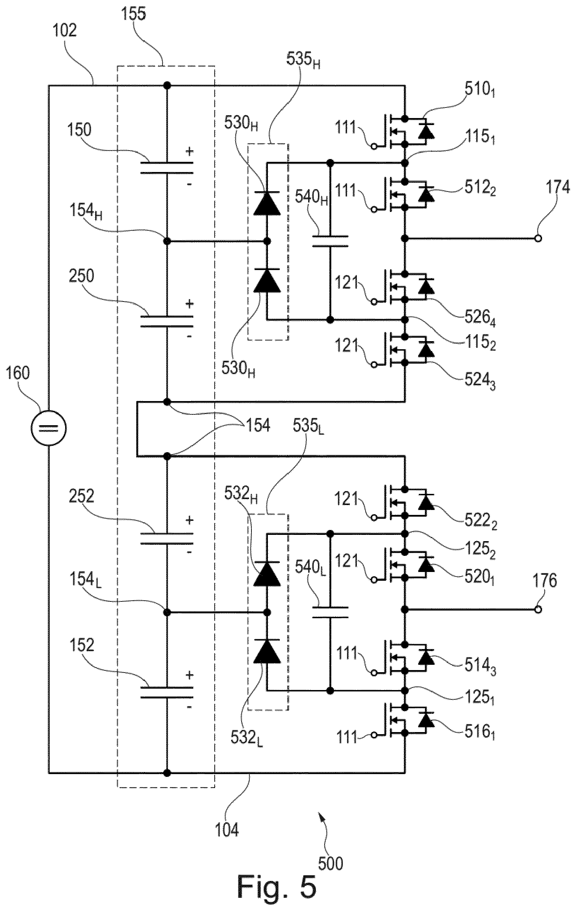

Referring now to Fig. 5, a 5-level inverter 500 based of two 3-level sub-modules is described. The 3-level sub-modules may be similar in operation to the 3-level inverter 100 described with reference to Fig. 1. The inverter 500 shares several of the characteristics of inverters according to embodiments described herein, such as the inverters 100, 200, 300, 400 described with reference to Fig. 1 to 4. Only the differences to the inverters 100, 200, 300, 400 will be described.

The inverter 500 includes a voltage divider 155 having four capacitors 150, 152, 250, 252 connected in series. The voltage divider defines three partial voltage nodes 154, 154_{H}, 154_{L}. Partial voltage node 154 may be a neutral voltage node.

The inverter 500 includes eight electronic switches 510, 512, 514, 516, 520, 522, 524, 526 connected in series to the DC bus. The outermost electronic switches 510, 516 may be connected to legs 102, 104 of the DC bus.

As shown in Fig. 5, the inverter 500 includes a first first-level clamping diode pair 535_{H} and a second first-level clamping diode pair 535_{L}. In some embodiments, diodes of the first first-level clamping diode pair 535_{H} and the second first-level clamping diode pair 535_{L} are not directly connected. The first first-level clamping diode pair 535_{H} and the second first-level clamping diode pair 535_{L} each include two diodes 530_{H}, 530_{L} and 532_{H}, 532_{L} connected in series and defining a first and a second diode node. The first diode node is connected to a first partial voltage node 154_{H}, and the second diode node is connected to a second partial voltage node 154_{L}.

A first diode 530_{H} of the first first-level clamping diode pair 535_{H} is connected to a first intermediate switch node 115₁ to define a first partial clamped voltage of the electronic switches 510, 512. A second diode 530_{L} of the first first-level clamping diode pair 535_{H} is connected to a second intermediate switch node 115₂ to define a second partial clamped voltage of the electronic switches 524, 526.

A first diode 532_{H} of the second first-level clamping diode pair 535_{L} is connected to a third intermediate switch node 125₂ to define a third partial clamped voltage of the electronic switches 520, 522. A second diode 532_{L} of the second first-level clamping diode pair 535_{L} is connected to a fourth intermediate switch node 125₁ to define a fourth partial clamped voltage of the electronic switches 514, 516.

The inverter 500 has two outputs 174, 176, which are connected differently when compared to the outputs 170, 172 of the inverters 100, 200, 300, 400. In particular, in some embodiments, none of the outputs 174, 176 is connected to a neutral point, such as the neutral voltage node 154.

A flying capacitor 540_{H}, 540_{L} is connected in parallel to each of the first and second first-level clamping diode pair 535_{H}, 535_{L}.

In the inverter 500, the electronic switches 510, 512, 514, 516 are grouped into high-side switches, and the electronic switches 520, 522, 524, 526 are grouped into low-side switches. Accordingly, the control inputs 111 of the high-side switches 510, 512, 514, 516, and the control inputs 121 of the low-side switches 520, 522, 524, 526 are functionally connected to simultaneously switch the high-side switches and/or the low-side switches.

When the high-side switches are closed, the outputs 174, 176 are connected to the voltage of the DC power source. When the low-side switches are closed, the outputs are shorted via the low-side switches. Thus, in a non-limiting example, the inverter 500 may be particularly suitable for driving inductive loads, such as Medium-Frequency Transformers with a series-connected DC blocking capacitor. Additionally, or alternatively, the inverter 500 may be one of several inverters, e.g. in a bridge-type configuration.

Referring now to Fig. 6, a 7-level inverter 600 based of two 4-level sub-modules is described. The 4-level sub-modules may be similar in operation to the 4-level inverter 200 described with reference to Fig. 2. The inverter 600 shares several of the characteristics of inverters according to embodiments described herein, such as the inverters 100, 200, 300, 400, 500 described with reference to Fig. 1 to 5. Only the differences to the inverters 100, 200, 300, 400, 500 will be described.

The inverter 600 includes a voltage divider 155 having 6 capacitors connected in series and defining partial voltage nodes. A partial voltage node 154 may be a neutral voltage node.

Similar to the 4-level inverter 200, each of the 4-level sub-modules includes a fist-level clamping diode pair 635_{H}, 635_{L} and flying capacitors 640_{H}, 640_{L} connected in parallel to diode pairs of the first-level clamping diode pair. Each first-level clamping diode pair 635_{H}, 635_{L} defines two partial clamped voltages at intermediate switching nodes. A partial clamped voltage node defined by the first-level clamping diode pair 635_{H}, 635_{L} is connected to a diode node of a second-level clamping diode pair 636_{H}, 636_{L}. Each second-level clamping diode pair 636_{H}, 636_{L} defines two partial clamped voltages at intermediate switching nodes. A flying capacitor 648_{H}, 648_{L} is connected in parallel to each one of the first and the second the second-level clamping diode pairs.

As described with reference to the inverter 500 shown in Fig. 5, the inverter 600 includes high-side switches 610 and low-side switches 620.

According to embodiments, while the voltage divider 155 was described as a plurality of serially connected capacitors, additionally, or alternatively, different voltage dividers may be realized without deviating from the scope of this disclosure. For example, the voltage divider may include one or more capacitors provided e.g. between legs of the DC bus, and/or the legs of the DC bus and a neutral voltage node, and some or all of the partial voltage nodes may be defined by e.g. a voltage divider including a plurality of resistances, such as a resistive voltage divider in parallel to the capacitive voltage divider.

Referring now to Fig. 7, a method of operating a diode-clamped inverter is described. The diode-clamped inverter may be an inverter according to embodiments described herein, such as the inverter 100, 200, 300, 400, 500, or 600.

According to embodiments, the method, particularly the operations of the method related to the switching of the electronic switches, may be performed by a controller according to embodiments described herein.

The inverter may include a plurality of electronic switches connected in series, a first one of the electronic switches being connected to a first leg of a DC bus, and a second one of the electronic switches being connected to a second leg of the DC bus. The electronic switches are grouped into high-side switches and low-side switches. The inverter has at least one first-level clamping diode pair, each first-level clamping diode pair including at least two diodes connected in series and defining a diode node in between the at least two diodes. At least one diode of the first-level clamping diode pair is connected, at a side of the diode other than the diode node, to an intermediate switch node to define a first partial clamped voltage at the intermediate switch node.

According to embodiments, the inverter may include a flying capacitor connected in parallel to a clamping diode pair.

The method includes providing a flying capacitor parallel to the at least one clamping diode pair. A plurality of flying capacitors may be provided. The flying capacitor(s) may be one or more of the flying capacitors 140, 240, 340, 440, 442, 444, 446, 448, 540, 640, 648 described with reference to Fig. 1 to 6.

The method further includes switching all high-side switches simultaneously, and switching all low-side switches simultaneously.

Referring now to Fig. 7, a graph 700 is provided showing the switching of the high-side switches and the switching of low-side switches. The graph 700 shows the signal levels of signals S_{Hx}, S_{Lx} along a time t. Signal S_{Hx} may be provided to the inputs of high-side switches, such as the control inputs 111 described with reference to Fig. 1 to Fig. 6, and signal S_{Lx} may be provided to the inputs of low-side switches, such as the inputs 121 described with reference to Fig. 1 to Fig. 6.

As shown in the graph 700, the signals S_{Hx}, S_{Lx} are provided in an alternating manner at a predetermined frequency. When switching between signals S_{Hx}, S_{Lx}, a dead-time T_{d} is provided, e.g. for allowing all closed switches to return into an open state, and/or for the voltages applied at the intermediate switching nodes to stabilize. In particular, the dead-time T_{d} may beneficially allow the voltage over each of the plurality of switches to stabilize at a voltage lower than a maximum blocking voltage of the switch, which may beneficially prevent failures, such as, but not limited to avalanche breakdown effects of MOSFETs.

By switching the plurality of electronic switches as shown in graph 700, the inverter generates a 2-level AC output power having a voltage, such as an output voltage having an essentially rectangular waveform. Additionally, in some embodiments, an output state having a zero output voltage may be generated, e.g. when all the switches are in an open state, e.g. during the dead-time T_{d}. In some embodiments, the output voltage may include an output state having output voltage levels of +V_{DC}/2 and -V_{DC}/2, and optionally zero (open circuit). In some embodiments, the output voltage may include an output state having an output voltage level of +V_{DC} and zero (closed circuit), and optionally zero (open circuit).

According to embodiments, the method may include driving a medium frequency transformer with the output voltage. According to some embodiments, the method may include the use of an inverter according to embodiments described herein, e.g. to drive a medium frequency transformer. The use may include converting a voltage, such as converting a DC voltage into an AC voltage, or converting a DC voltage into a DC voltage.

The inverter and method of operating a diode-clamped inverter has been described according to exemplary embodiments. As is evident from the disclosure, the inverter may be easily adapted according to the specific requirements. In particular, for switching a higher DC voltage, instead of relying on electronic switches having a higher blocking voltage, a higher-level inverter including a higher plurality of electronic switches connected in series may be utilized.

An inverter according to the embodiments shown in Fig. 5 or Fig. 6 may have a beneficially reduced component count, while providing a beneficially high plurality of electronic switches. It is within the scope of this disclosure to provide inverters based on sub-modules, such as a 10-level inverter based on 5-level sub-modules, or even a 13-level inverter based on 7-level sub-modules.

## Claims

1. An inverter (100), comprising:
a DC bus connectable to a DC power source (160) and comprising a first leg (102) and a second leg (104);
a plurality of electronic switches (110, 112, 120, 122) connected in series, a first one of the electronic switches (110) being connected to the first leg (102) and a second one of the electronic switches (120) being connected to the second leg (104), the plurality of electronic switches defining a plurality of intermediate switch nodes (115, 125) therebetween;
a voltage divider (155) connected to the first leg (102) and the second leg (104), the voltage divider comprising a plurality of capacitors (150, 152) connected in series and defining at least one first partial voltage node (154);
at least one first-level clamping diode pair (135), each first-level clamping diode pair (135) comprising at least two diodes (130H, 130L) connected in series and defining a diode node (134) in between the at least two diodes (130H, 130L), the diode node (134) being connected to one of the at least one first partial voltage node (154), wherein at least one diode (130H, 130L) of the first-level clamping diode pair (135) is connected, at a side of the diode other than the diode node (134), to an intermediate switch node (115, 125) to define a first partial clamped voltage at the intermediate switch node (115, 125);
at least one flying capacitor (140) connected in parallel to the first-level clamping diode pair (135); wherein
the electronic switches (110, 112, 120, 122) are grouped into high-side switches (110, 112) and low-side switches (120, 122), and wherein
control inputs (111) of the high-side switches (110, 112) are functionally connected to simultaneously switch all of the high-side switches (110, 112); and
control inputs (121) of the low-side switches (120, 122) are functionally connected to simultaneously switch all of the low-side switches (120, 122).

2. The inverter according to claim 1, further comprising a controller connected to the control inputs (111, 121) and configured for providing signals for simultaneously switching the high-side switches (110, 112), and for simultaneously switching the low-side switches (120, 122).

3. The inverter according to claim 1 or 2, wherein the voltage divider comprises an even number of capacitors, and wherein the at least one first partial voltage node (154) comprises a neutral voltage node.

4. The inverter according to any one of the preceding claims, wherein the at least one first-level clamping diode pair (135) defines a second partial clamped voltage at a first-level partial clamped voltage node (254), further comprising:
at least one second-level clamping diode pair (235), the second-level clamping diode pair comprising at least two diodes (230_{H}, 230_{L}) connected in series and defining a diode node (234) in between the at least two diodes, the diode node (234) being connected to the first-level partial clamped voltage node (254), wherein at least one diode (230_{H}, 230_{L}) of the second clamping diode pair is connected to an intermediate switch node (115, 125) to define a third partial clamped voltage at the intermediate switch node (115, 125); and
at least one flying capacitor (240) connected in parallel to the second-level clamping diode pair (235).

5. The inverter according to claim 4, comprising
at least two second-level clamping diode pairs (235) according to claim 4 connected in series, each diode node (234H, 234L) being connected to a first-level partial clamped voltage node (134H, 134L) having a different second partial clamped voltage;
the flying capacitor connected in parallel to the second-level clamping diode pair being at least two flying capacitors (240H, 240L) connected in series.

6. The inverter according to claim 4 or 5, comprising
at least one n-th level clamping diode pair (335), the n-th level clamping diode pair comprising at least two diodes (330, 332) connected in series and defining a diode node (334) in between the at least two diodes, the diode node (334) being connected to a (n-1)-th level partial clamped voltage node, wherein at least one diode (330, 332) of each n-th level clamping diode pair (335) is connected to an intermediate switch node (115, 125) to define an n-th level partial clamped voltage at the intermediate switch node (115, 125); and
at least one flying capacitor (340) connected in parallel to the n-th level clamping diode pair;
wherein n is equal or larger than 2.

7. The inverter according to any one of the preceding claims, wherein one of the first partial voltage nodes is connected to an intermediate switch node.

8. The inverter (500) according to any one of the preceding claims, comprising:
the voltage divider (155) comprising four capacitors (150, 152, 250, 252) connected in series and defining three partial voltage nodes (154, 154_{H}, 154_{L});
eight electronic switches (510, 512, 514, 516, 520, 522, 524, 526) connected in series to the DC bus;
a first first-level clamping diode pair (535_{H}) comprising two diodes (530_{H}, 530_{L}) connected in series and defining a first diode node, the first diode node being connected to a first one of the three partial voltage nodes (154_{H}), wherein
a first diode (530_{H}) of the first first-level clamping diode pair (535_{H}) is connected to a first intermediate switch node (115₁) to define a first partial clamped voltage of the electronic switches (510, 512); wherein
a second diode (530_{L}) of the first first-level clamping diode pair (535_{H}) is connected to a second intermediate switch node (115₂) to define a second partial clamped voltage of the electronic switches (524, 526);
a second first-level clamping diode pair (535_{L}) comprising two diodes (532_{H}, 532_{L}) connected in series and defining a second diode node, the second diode node being connected to a second one of the three partial voltage nodes (154_{L}), wherein
a first diode (532_{H}) of the second first-level clamping diode pair (535_{L}) is connected to a third intermediate switch node (125₂) to define a third partial clamped voltage of the electronic switches (520, 522); wherein
a second diode (532_{L}) of the second first-level clamping diode pair (535_{L}) is connected to a fourth intermediate switch node (125₁) to define a fourth partial clamped voltage of the electronic switches (514, 516); and wherein
a third one of the three partial voltage nodes (154) is connected to a fifth intermediate switch node.

9. The inverter according to any one of the preceding claims, wherein the inverter is configured for switching a power of a DC power source having a voltage of at least 10 kV, and/or a power of at least 100 kW.

10. The inverter according to any one of the preceding claims, wherein a current rating of the diodes of each clamping diode pair is below 10 A, and/or wherein a capacitance of each of the flying capacitors is below 500 nF.

11. The inverter according to any one of the preceding claims, wherein the inverter is configured for driving a medium frequency transformer in a two-level operation.

12. The inverter according to any one of the preceding claims, wherein the electronic switches are selected from the group consisting of MOSFETs, IGBTs, HEMTs, and IGCTs, and particularly wherein the electronic switches are rated for a blocking voltage of less than 1.7 kV.

13. Method of operating a diode-clamped inverter, the diode-clamped inverter comprising:
a plurality of electronic switches (110, 112, 120, 122) connected in series, a first one of the electronic switches (110) being connected to a first leg (102) of a DC bus, and a second one of the electronic switches (120) being connected to a second leg (104) of the DC bus; wherein the electronic switches (110, 112, 120, 122) are grouped into high-side switches (110, 112) and low-side switches (120, 122);
at least one first-level clamping diode pair (135), each first-level clamping diode pair (135) comprising at least two diodes (130H, 130L) connected in series and defining a diode node (134) in between the at least two diodes (130H, 130L), wherein at least one diode (130H, 130L) of the first-level clamping diode pair (135) is connected, at a side of the diode other than the diode node (134), to an intermediate switch node (115, 125) to define a first partial clamped voltage at the intermediate switch node (115, 125); the method comprising:
providing a flying capacitor (140) parallel to the at least one clamping diode pair;
switching all high-side switches (110, 112) simultaneously; and
switching all low-side switches (120, 122) simultaneously.

14. The method according to claim 13, wherein the method includes, by switching the high-side switches and/or the low-side switches, generating a 2-level AC output power.

15. The method according to claim 14, further comprising driving a medium frequency transformer with the output power.
